(19) Europäisches Patentamt
European Patent Office
Office européen des brevets

(11) **EP 2 895 889 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(21) Anmeldenummer: **13763051.3**

(22) Anmeldetag: **16.09.2013**

(51) Int Cl.:
*G01V 3/10* (2006.01)          *B60L 3/00* (2019.01)
*B60L 53/12* (2019.01)          *H02J 5/00* (2016.01)
*H02J 7/02* (2016.01)

(86) Internationale Anmeldenummer:
**PCT/EP2013/069174**

(87) Internationale Veröffentlichungsnummer:
**WO 2014/041176 (20.03.2014 Gazette 2014/12)**

(54) **METALL-FREMDKÖRPER-ERKENNUNGSSYSTEM FÜR INDUKTIVE ENERGIEÜBERTRAGUNGSSYSTEME**

METAL FOREIGN BODY-IDENTIFICATION SYSTEM FOR INDUCTIVE ENERGY TRANSMISSION SYSTEMS

SYSTÈME DE DÉTECTION DE CORPS ÉTRANGERS EN MÉTAL POUR DES SYSTÈMES DE TRANSMISSION D'ÉNERGIE INDUCTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2012 DE 102012108671**

(43) Veröffentlichungstag der Anmeldung:
**22.07.2015 Patentblatt 2015/30**

(73) Patentinhaber:
• **Paul Vahle GmbH & Co. KG**
**59174 Kamen (DE)**
• **Turki, Faical**
**59192 Bergkamen (DE)**

(72) Erfinder: **TURKI, Faical**
**59192 Bergkamen (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
**EP-A1- 0 222 028          EP-A2- 1 189 076**
**EP-A2- 2 317 625          DE-A1-102011 086 904**
**DE-A1-102011 105 063      DE-U1-202011 050 264**
**US-A- 3 461 353           US-A1- 2012 175 967**
**US-A1- 2013 176 023**

**Beschreibung**

Die vorliegende Erfindung betrifft ein induktives Energieübertragungssystem mit einem Erkennungssystem zur Erkennung von elektrisch leitenden Fremdkörpern im Bereich zwischen der Primär- und Sekundärwicklung des induktiven Energieübertragungssystems, wobei das Erkennungssystem ebenfalls eine Primärspule und eine Sekundärspule aufweist, die miteinander gekoppelt sind, und die Primärspule und die Sekundärspule des Erkennungssystems Bestandteile von elektrischen Schwingkreisen sind, die beide dieselbe Resonanzfrequenz aufweisen.

Die berührungslose Energieübertragung verwendet hochfrequente magnetische Felder. Gelangen elektrisch leitende Fremdkörper in den Bereich dieser magnetischen Felder werden in ihnen Wirbelströme erzeugt, welche zur Erwärmung der Fremdkörper führen. Hinzu kommen noch Ummagnetisierungsverluste bei ferromagnetischen Stoffen, die ebenfalls zur Erwärmung des Fremdkörpers beitragen. Durch die Wirbelströme entstehen zudem Verluste bei der Energieübertragung.

Die Fremdkörper können durch die Erwärmung entzündet werden. Sofern es sich bei den Fremdkörpern um Lebewesen handelt, sind diese aufgrund der möglichen Erwärmung einer großen Gefahr ausgesetzt.

Elektrisch leitende Fremdkörper stellen somit einen Störfaktor, z.B. bei der kontaktlosen Batterieladung elektrischer Fahrzeuge, dar. Es ist daher notwendig, dass vor jeder Energieübertragung mittels geeigneter Maßnahmen, wie z.B. automatischer oder manueller Reinigungsvorgänge, sichergestellt wird, dass Fremdkörper aus dem Bereich des hochfrequenten Magnetfeldes des Energieübertragungssystems entfernt worden sind. So kann z.B. der Fahrer eines Fahrzeuges, dessen Batterie induktiv geladen werden soll, stets vor dem Ladevorgang aufgefordert werden, evtl. Fremdkörper zu entfernen. Um ein unnötiges Reinigen zu vermeiden, ist es daher wünschenswert, wenn Fremdkörper automatisch erkannt werden können, und nur bei tatsächlichem Vorhandensein von Fremdkörpern eine Aufforderung zur Reinigung des Energieübertragungssystems an den Fahrer generiert wird.

Es sind zahlreiche Systeme zur Erkennung von Fremdkörpern bekannt. Die DE 102009033236 A1 offenbart ein System zur Erkennung von Fremdkörpern, bei dem mittels Ultraschall, Radar, Infrarot oder elektronischem Bildsensor Fremdkörper erkannt werden. Die Sensoren sind dabei bevorzugt an der Sekundärseite, also dem Fahrzeug, angeordnet. Nachteilig dabei ist, dass die Sensoren äußeren Witterungseinflüssen und Verschmutzung ausgesetzt und somit stör- und fehleranfällig sind und zudem durch Steinschlag oder äußere Kräfte leicht zerstört werden können.

Die DE 102009033237 A1 offenbart ein System zur Erkennung von Fremdkörpern, bei dem mittels einer Vielzahl von regelmäßig angeordneten planaren Spulen als Messinduktivitäten, Fremdkörper erkannt werden sollen. Dabei werden die Induktivitäten aller Spulen mittels einer Auswerteeinrichtung überwacht und mittels einer Referenzimpedanz bzw. Referenzverteilung verglichen. Bei Vorliegen einer Abweichung vorbestimmten Ausmaßes wird ein Signal ausgegeben, welches die Abweichung anzeigt. Nachteilig bei diesem System ist, dass eine Vielzahl von Induktivitäten mittels geeigneter Elektronik überwacht werden muss. Zudem wird nur die Änderung der Induktivität aufgrund eines Fremdkörpers gemessen.

Die DE 69827733 T2 offenbart ein System zur Erkennung von Fremdkörpern, bei dem zwei Primär- und zwei Sekundärwicklungen vorgesehen sind, wobei die beiden primären Wicklungen mit einem gemeinsamen Kern verbunden aber räumlich voneinander getrennt angeordnet sind, so dass jede ein Wechselmagnetfeld in einem unterschiedlichen räumlichen Bereich erzeugt. Die sekundären Wicklungen sind analog zu den primären Wicklungen angeordnet, so dass sie während des Ladevorganges den primären Wicklungen gegenüberliegen. Begründet durch die getrennt angeordneten Primärwicklungen reagieren die Oszillationsschaltkreise der Gegentaktzweige unabhängig voneinander auf ungleiche Lasten der räumlichen Regionen des magnetischen Wechselfeldes. In Verbindung mit Arbeitswerten können mit dem System Lasttypen in dem sekundären Teil des Wechselmagnetfeldes, wie beispielsweise Volllast, keine Last und unrichtige Last aufgrund eines Fremdkörpers von dem System detektiert und entsprechende Maßnahmen eingeleitet werden. Nachteilig bei diesem System ist, dass für die Detektierung von Fremdkörpern stets der Ladevorgang begonnen werden muss.

Die DE 69834537 T2 offenbart ein System zu berührungslosen Energieübertragung, bei dem primärseitig und sekundärseitig jeweils zwei getrennte Wicklungen angeordnet sind, wobei eine Wicklung jeweils für die Energieübertragung und eine Wicklung für die Signalübertragung vorgesehen ist. Der Ladevorgang kann stets nur dann erfolgen, wenn über die Signalübertragungsspulen ein entsprechendes Signal an die Primärseite übertragen wird. Dieses System verhindert lediglich, dass sich Fremdkörper erhitzen können, sofern die Verbrauchereinheit nicht vor der Ladestation angeordnet ist. Dieses System kann keine Fremdkörper erkennen, sofern die Verbrauchereinheit vor der Primärseite der Ladestation angeordnet ist.

Aus der EP 2317625 A2 ist ein System zur berührungslosen Energieübertragung bekannt, bei dem zur Erkennung von Fremdkörpern der Stromfluss durch die Primärwicklung gemessen und mit einem vorbestimmten Wert verglichen wird, wobei zur Erkennung des Fremdkörpers die Übertragungsfrequenz erhöht wird und die Last der Verbrauchereinheit von dem Sekundärschwingkreis getrennt wird. Nachteilig bei diesem System ist, dass der Abstand zwischen der Primär- und Sekundärwicklung nicht stets gleich und somit der Kopplungsfaktor stets unterschiedlich ist, so dass sich stets andere Ströme im Primärkreis einstellen. Zudem muss für die Erkennung der Fremdkörper stets der Ladevorgang unterbrochen werden, was zu einem schnelleren Verschleiß und Altern der zu ladenden Batterie und der verwendeten Bauteile führt. Ebenfalls nachteilig ist, dass aufgrund der Größe der Primär- und Sekundärwicklung im Verhältnis dazu kleine Fremdkörper nicht sicher erkannt werden können.

Aus US 3461353 A, EP 1189076 A2, EP 0222028 A1, DE 10 2011 086904 A1, DE 10 2011 105063 A1 und US 2012/175967 A1 sind Detektorsysteme bekannt, die mittels magnetisch gekoppelter Spulen zur Fremdkörpererkennung dienen.

DE 202011050264 offenbart ein induktives Energieübertragungssystem, bei dem die Primär- und Sekundärspule des Energieübertragungssystems während des Abklingvorganges zur Fremdkörpererkennung genutzt werden.

Aus US 2013/176023 A1 ist ein induktives Energieübertragungssystem bekannt, wobei eine zusätzliche Spule zur Fremdkörpererkennung verwendet wird.

Aufgabe der vorliegenden Erfindung ist es, ein induktives Energieübertragungssystem mit einem Erkennungssystem bereitzustellen, das auch kleine Fremdkörper sicher erkennt.

Diese Erfindung wird vorteilhaft mit einem System mit den Merkmalen des Anspruch 1 gelöst. Vorteilhafte Ausgestaltungen des Systems nach Anspruch 1 ergeben sich durch die Merkmale der Unteransprüche.

Je nach Werkstoff verursachen nicht ferromagnetische Metalle im Magnetfeld Verzerrungen in Form von Verdrängung bei reinen Wirbelstromeffekten. Dagegen bündeln ferromagnetische Werkstoffe das magnetische Feld. Eine einfache Messung dieser Einflüsse kann durch die Ermittlung der Induktivität einer Wicklung erfolgen. Ein entsprechendes System ist wie oben beschrieben aus der DE 102009033236 A1 vorbekannt. Die Änderung der Induktivität ist jedoch in der Regel zu gering um akkurate Schaltschwellen zu erzeugen.

Die Erfindung sieht deshalb vor, eine zweite Spule vorzusehen, die ebenso von der Feldverzerrung durch den oder die Fremdkörper betroffen ist. Die beiden verwendeten Spulen sind magnetisch gekoppelt, wobei die Kopplung durch die Fremdkörper verändert wird. Diese Veränderung kann durch Messen einer elektrischen Größe, wie z.B. den durch eine Spule fließenden Strom oder durch die induzierte Spannung, detektiert werden. Um die Änderung der Kopplung genau detektieren zu können, sind die gekoppelten Spulen Bestandteil von Schwingkreisen, die die gleiche Resonanzfrequenz aufweisen. Durch die hohe Güte der gekoppelten Schwingkreise ist die Änderung der Kopplung durch die sich ändernde Blindleistung gut zu detektieren. So kann z.B. in die erste Spule ein Signal eingespeist werden und in der zweiten Spule die induzierte Spannung gemessen werden. Solange das System in Resonanz ist, ist die induzierte Spannung sehr hoch. Sobald sich jedoch ein Fremdkörper im Bereich der Spulen befindet, verstimmen sich beide Schwingkreise durch die Änderung der Induktivitäten und die Kopplung zwischen den Spulen ändert sich, wodurch die induzierte Spannung gegenüber dem Resonanzfall sinkt. Durch das Vorsehen der gekoppelten Schwingkreise ist die Änderung der induzierten Spannung hinreichend groß, so dass die induzierte Spannung zur Erkennung von elektrisch leitenden Fremdkörpern mit einem Schwellwert verwendet werden kann.

Das erfindungsgemäße Erkennungssystem kann als eigenständiges System in einem eigenen Gehäuse untergebracht sein, welches z.B. auf die Primärwicklung eines induktiven Energieübertragungssystems gelegt oder auf diesem befestigt werden kann. Es ist jedoch ebenso möglich, dass die beiden Spulen, welche bevorzugt als Flachspulen ausgebildet sein können, und optional auch die zugehörige Auswerteelektronik nebst Beschaltung der Spulen in dem primärseitigen oder sekundärseitigen Gehäuse des induktiven Energieübertragungssystems angeordnet sind.

Die Primär- und Sekundärspule des Erkennungssystems decken die aktive Fläche des induktiven Energieübertragungssystems ab. Sie können insbesondere mindestens die Größe und Form der Primärwicklung oder der Sekundärwicklung des Energieübertragungssystems aufweisen, je nachdem ob sie in der Nähe der Primärwicklung oder der Sekundärwicklung des induktiven Energieübertragungssystems angeordnet sind. Die Spulen können jedoch auch von ihrer abgedeckten Fläche größer als die Wicklungen des Energieübertragungssystems ausgebildet sein, so dass sie über diese seitlich hinausragen.

Um möglichst kleine Fremdkörper mittels des Erkennungssystems zu detektieren, sind die Spulen so ausgebildet, dass durch das magnetische Feld der Übertragungseinrichtung keine oder im Verhältnis zur Spannung der Quelle kleine elektrische Spannung in der Primär- und Sekundärspule des Erkennungssystems induziert wird. Dazu sind die Spulen mäanderförmig gestaltet, so dass sich die in den einzelnen Leiterabschnitten der Spulen induzierten Spannungen aufgrund des Magnetfeldes der Energieübertragung gegenseitig aufheben. Hierzu kann jede Spule des Erkennungssystems durch mehrere gerade Leitungsabschnitte gebildet sind, welche jeweils zueinander parallel und in Serie angeordnet sind, wobei gleichzeitig die geraden Leitungsabschnitte der Primär- und Sekundärspulen zueinander parallel, in einem Winkel von 45° oder senkrecht zueinander angeordnet sind.

Die Länge der geraden Leitungsabschnitte kann vorteilhaft so bemessen sein, dass sich die Leitungsabschnitte über die Primäranordnung oder Sekundäranordnung, insbesondere deren Wicklungen, des Energieübertragungssystems erstrecken.

Der Abstand der benachbarten geraden und parallel zueinander angeordneten Leitungsabschnitte jeder Spule ist dabei an die Größe der kleinsten zu detektierenden Fremdkörper angepasst. Der Abstand kann je nach zu detektierenden Fremdkörpern 1 bis 10 cm, besonders bevorzugt 2,5 bis 8 cm, betragen.

In einer besonders bevorzugten Ausführung des Erkennungssystems wird der primäre Schwingkreis durch die Primärspule und einen Kondensator, welche insbesondere in Reihe geschaltet sind, gebildet. Der sekundäre Schwingkreis wird durch die Sekundärspule und einen Kondensator, welche parallel oder seriell geschaltet sind, gebildet, wobei die Quelle eine Wechselspannungs- oder Wechselstromquelle ist, an der ein primärer Schwingkreis angeschlossen ist. Ein Gleichrichter richtet dabei die sekundärseitige Ausgangsspannung des sekundärseitigen Schwingkreises gleich und glättet diese mittels eines Kondensators. Eine Überwachungseinrichtung vergleicht dabei die Ausgangsspannung des Gleichrichters mit einem in einem Speicher abgelegten Spannungswert. Sofern die gemessene Ausgangsspannung unter einen bestimmten Schwellwert fällt, wird ein Signal generiert, welcher für einen detektierten Fremdkörper steht.

Die Überwachungseinrichtung kann vorteilhaft durch einen Mikrocontroller gebildet sein, der die Quelle, insbesondere mit einem PWM-Ausgang, bildet, und der mit einem Analog-Digitalwandler-Eingang die Ausgangsspannung des Gleichrichters ermittelt.

Vorteilhaft sind die Spulen des Erkennungssystems durch Leiterbahnen einer Leiterplatte gebildet, wodurch sie einfach und kostengünstig hergestellt werden können. So kann z.B. eine zweiseitig kaschierte leiterbahn verwendet werden, welche mit ihren beiden Seiten jeweils eine Spule bildet. Auf der Leiterplatte können zudem weitere elektrische Bauteile angeordnet werden, so dass sich eine kleine und kompakte Bauweise ergibt.

Das Erkennungssystem kann sich in Intervallen selbst kalibrieren, in dem die Frequenz der Quelle beim Kallibrierungsvorgang so lange variiert wird, bis die Resonanzfrequenz, bei der die maximale Blindleistung der Schwingkreisanordnung auftritt, ermittelt ist.

Nachfolgend wird die Erfindung anhand von Zeichnungen näher erläutert.

Es zeigen:

Fig. 1:   Blockschaltbild des erfindungsgemäßen Erkennungssystems;

Fig. 2:   erste mögliche Ausbildung der Spulen des Erkennungssystems;

Fig. 3:   zweite mögliche Ausbildung der Spulen des Erkennungssystems;

Fig. 4:   dritte mögliche Ausbildung der Spulen des Erkennungssystems;

Fig. 5:   mögliche elektrische Schaltungsanordnung des Erkennungssystems

Fig. 6:   Ersatzschaltbild zur Bestimmung der elektrischen Komponenten der Schwingkreise.

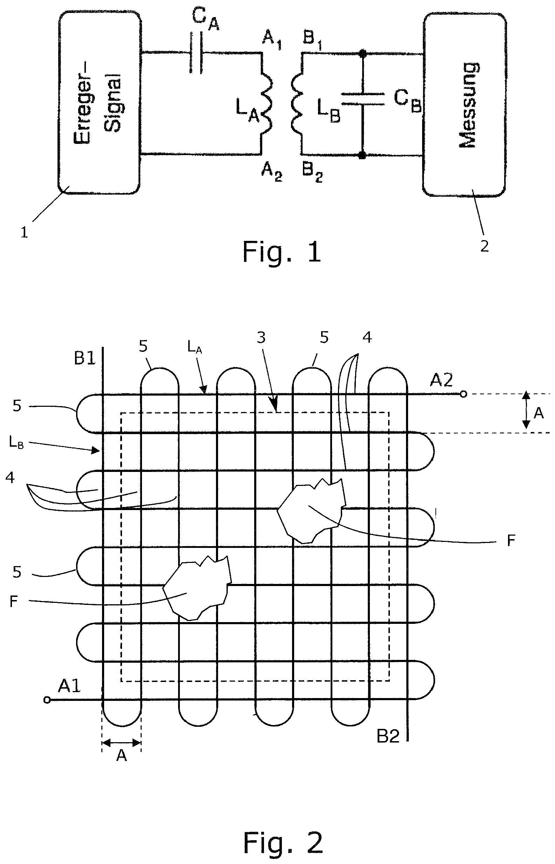

Die Figur 1 zeigt ein Blockschaltbild des erfindungsgemäßen Erkennungssystems. Das Erkennungssystem weist einen Primärschwingkreis auf, welcher durch die Reihenschaltung aus der Kapazität $C_A$ und der Induktivität $L_A$ der primärseitigen Spule gebildet ist. Der primärseitige Schwingkreis $C_A$-$L_A$ wird durch ein Erregersignal zur Schwingung angeregt, wobei das Erregersignal selbst von einer Quelle 1 erzeugt wird. Der sekundärseitige Parallelschwingkreis wird durch die Kapazität $C_B$ und die Induktivität $L_B$ der sekundärseitigen Spule gebildet. Die in den sekundärseitigen Schwingkreis induzierte Spannung wird mittels der Messvorrichtung 2 gemessen. Die Punkte $A_1$, $A_2$, $B_1$ und $B_2$ sind die Anschlusspunkte der Induktivitäten $L_A$, $L_B$ bzw. der Spulen des Erkennungssystems.

Die Figur 2 zeigt eine erste mögliche Ausbildung der Spulen $L_A$ und $L_B$ des Erkennungssystems. Die einzelnen Leiterabschnitte der Spulen $L_A$ und $L_B$ weisen gerade Leiterabschnitte 4 auf, die zueinander parallel angeordnet und in Reihe angeordnet sind und an ihren Enden durch die halbkreisförmigen Verbindungsabschnitte 5 miteinander elektrisch leitend verbunden sind. Man kann auch davon sprechen, dass die Leiter der Spulen $L_A$ und $L_B$ mäanderförmig verlegt sind. Die Spulen $L_A$ und $L_B$ können z.B. durch Leiter einer Leiterplatte gebildet sein. Beide Spulen $L_A$ und $L_B$ decken vorteilhaft die Fläche 3 der kontaktlosen Energieübertragung ab. Vorteilhaft ist es, wenn die Spulen $L_A$ und $L_B$ über den Rand der Fläche 3, welche insbesondere durch die Primäroder Sekundärspule des Energieübertragungssystems gebildet sein kann, hinausragen. Die geraden Abschnitte 4 der Spulen $L_A$ und $L_B$ sind bei der Anordnung gemäß Figur 2 senkrecht zueinander angeordnet. Der Abstand A zwischen den geraden Leiterabschnitten 4 bestimmt die Empfindlichkeit des Erkennungssystems. Je kleiner der Abstand A ist, desto kleinere Fremdkörper können vom Erkennungssystem erkannt werden. Die Anordnung gemäß Figur 2 mit einfach verlegten Leitungen hat den Nachteil, dass die Spulenanschlüsse $A_1$, $A_2$, $B_1$ und $B_2$ weit voneinander entfernt liegen, wodurch lange Verbindungsleitungen zum Anschluss der Spulen $L_A$ und $L_B$ notwendig werden, wodurch eventuell das Hauptfeld der Energieübertragung mit den Verbindungsleitungen koppeln könnten.

Das Erkennungssystem verwendet Spulen $L_A$ und $L_B$ die getrennt von den Wicklungen des Energieübertragungssystems 3 angeordnet sind.

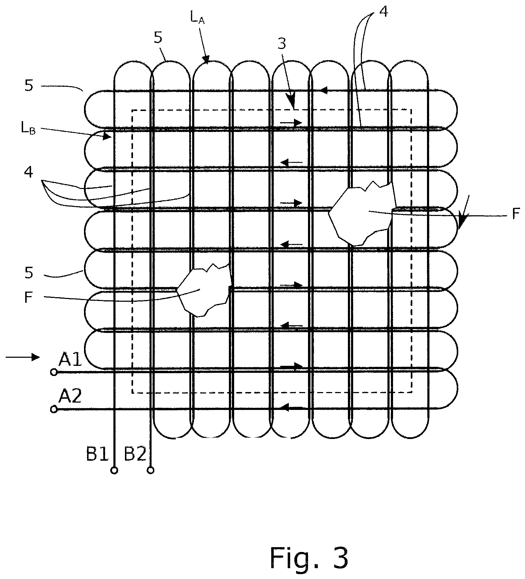

Die Figur 3 zeigt eine zweite mögliche Ausbildung der Spulen $L_A$ und $L_B$ des Erkennungssystems, bei denen die geraden Leitungen doppelt verlegt sind, so dass die Spulenanschlüsse $A_1$, $A_2$, $B_1$ und $B_2$ dicht beieinander liegen und somit keine langen zusätzlichen Anschlussleitungen notwendig sind und das magnetische Hauptfeld keine nachteiligen Einflüsse auf das Erkennungssystems hat. Auch bei dieser Anordnung der Spulen $L_A$ und $L_B$ sind deren geraden Leitungsabschnitte 4 senkrecht zueinander angeordnet.

Die Spulen $L_A$ und $L_B$ können auf Leiterplatten aufgebracht sein, da der nötige Strom durch die Spulen $L_A$ und $L_B$ zur Messung der Fremdkörper F klein ist. Es bietet sich auch an, die Elektronik in Form eines Signalgenerators zur Einspeisung und eine Messschaltung mit auf dieselbe Leiterplatte anzuordnen.

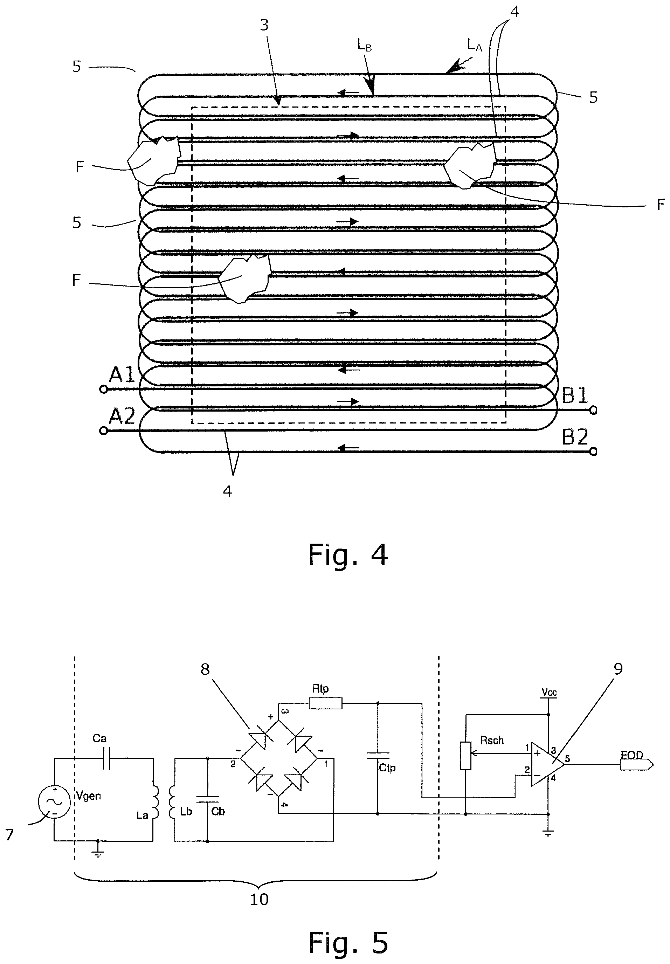

Die Figur 4 zeigt eine dritte mögliche Ausbildung der Spulen $L_A$ und $L_B$ des Erkennungssystems, bei denen die geraden Leitungsabschnitte 4 der Spulen $L_A$ und $L_B$ parallel zueinander angeordnet sind. Die Pfeile geben dabei die mögliche Stromflussrichtung während eines Augenblicks in der Spule $L_B$ an.

Die Figur 5 zeigt eine mögliche elektrische Schaltungsanordnung für das Erkennungssystem. Zur Einspeisung des primären Schwingkreises $C_A$-$L_A$ wird ein Signalgenerator 7 verwendet, welcher die Wechselspannung $V_{gen}$ mit einer Resonanzfrequenz $f_{res}$ des Schwingkreises erzeugt. Theoretisch würde ein Rechtecksignal ausreichen, da nur die Grundharmonische vom Schwingkreis benötigt wird. Aus EMV-Gründen empfiehlt es sich jedoch einen SinusGenerator einzusetzen. Je größer dessen Signalamplitude, desto genauer kann die Messung erfolgen, wobei jedoch ein Kompromiss mit der Störaussendung getroffen werden muss.

Auf der Sekundärseite ist der Parallelschwingkreis $L_B$-$C_B$ angeordnet. Die in der Spule $L_B$ induzierte Spannung wird mittels des Gleichrichters 8 und des Glättungskondensators $C_{tp}$ gleichgerichtet und geglättet. Die gleichgerichtete Spannung wird mittels eines Komparators 9 mit einer Referenzspannung, welche durch den Spannungsteiler an $R_{sch}$ an Eingang 1 des Komparators anliegt, verglichen, wobei der Ausgang 5 des Komparators das Signal FOD (Foreign Object Detection) an eine nachgeschaltete und nicht dargestellte Signal- und/oder Steuerungseinrichtung ausgibt. Sofern die geglättete Spannung kleiner als die Referenzspannung ist, so wird dies dahingehend interpretiert, dass sich mindestens ein Fremdkörper im Bereich der aktiven Energieübertragungsfläche befindet. Sofern die geglättete Spannung über oder gleich der Referenzspannung ist, wird dies dahingehend interpretiert, dass sich kein Fremdkörper im System befindet. Es ist möglich, dass nur die Komponenten im Bereich 10 auf einer Leiterplatte angeordnet werden.

Das Erkennungssystem kann auch während der Energieübertragung Fremdkörper laufend erkennen, so dass eine Unterbrechung der Energieübertragung zur Ermittlung von Fremdkörpern nicht notwendig ist.

Das Erkennungssystem kann zudem periodisch abgeglichen werden, indem die Referenzspannung den jeweiligen Bedingungen angepasst wird. Dies kann automatisch in bestimmten Zeitabständen erfolgen.

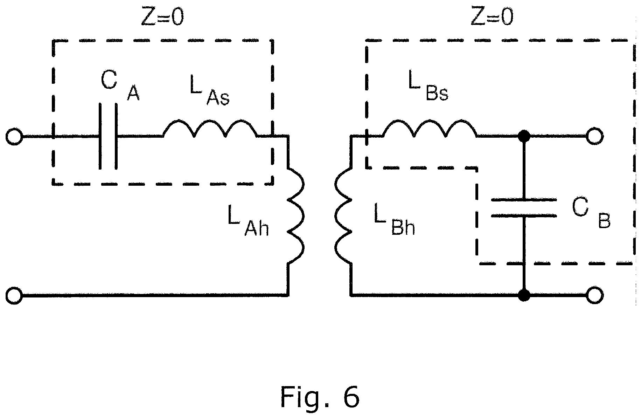

Die Figur 6 zeigt ein Ersatzschaltbild zur Bestimmung der elektrischen Komponenten des primärseitigen und des sekundärseitigen Schwingkreises. Die Resonanz des in Figur 5 gezeigten primären Reihenschwingkreises mit dem sekundärseitigen Parallelschwingkreis kann mittels der Bauteile $L_A$, $C_A$, $L_B$ und $C_B$ z.B. durch Abgleich zwischen dem Kondensator $C_A$ bzw.

$C_B$ und der Streuinduktivität von $L_A$ bzw. $L_B$ erfolgen. Die gekoppelten Schwingkreise können durch das in Figur 6 gezeigte Ersatzschaltbild dargestellt werden, wobei die Spulen $L_A$ bzw. $L_B$ durch die zwei Streuinduktivitäten $L_{As}$ und $L_{Bs}$ und die Gegeninduktivitäten $L_{Ah}$ und $L_{Bh}$ dargestellt sind. Mindestens eine dieser drei Induktivitäten muss Bestandteil eines Resonanzkreises sein. Sofern die Resonanzkreise durch die Bauteile $C_A$-$L_{As}$ und $L_{Bs}$-$C_B$ gebildet werden, so errechnet sich die Resonanzfrequenz $f_{res}$ aus mit der Bedingung Z = 0 anhand der folgenden Gleichung:

$$f_{res} = \frac{1}{2\pi\sqrt{L_{AS} \times C_A}} = \frac{1}{2\pi\sqrt{L_{Bs} \times C_B}}$$

Der Abgleich kann somit derart vorgenommen werden, dass nur ein Teil jeder Spule $L_A$, $L_B$ Bestandteil eines Schwingkreises ist.

**Patentansprüche**

1. Induktives Energieübertragungssystem mit einem Erkennungssystem zur Erkennung von elektrisch leitenden Fremdkörpern (F) im Bereich (3) zwischen der Primär- und Sekundärwicklung des induktiven Energieübertragungssystems, wobei das Erkennungssystem ebenfalls eine Primärspule ($L_A$) und eine Sekundärspule ($L_B$) aufweist, die miteinander gekoppelt sind, und die Primärspule ($L_A$) und die Sekundärspule ($L_B$) des Erkennungssystems Bestandteile von elektrischen Schwingkreisen ($L_A$-$C_A$; $L_B$-$C_B$) sind, die beide dieselbe Resonanzfrequenz ($f_{res}$) aufweisen, wobei eine elektrische Quelle (7) einen Schwingkreis ($L_A$-$C_A$) anregt, und eine Überwachungseinrichtung mindestens eine elektrische Größe auf der Sekundär- und/oder Primärseite des Erkennungssystems überwacht und anhand der gemessenen elektrischen Größe die Fremdkörpererkennung vornimmt, **dadurch gekennzeichnet, dass** die Resonanzfrequenz ($f_{res}$) der gekoppelten Primär- und Sekundärspulen ($L_A$, $L_B$) des Erkennungssystems von der Grundfrequenz ($f_0$) und den Frequenzen der Oberharmonischen des Energieübertragungssystems verschieden ist, wobei die Primär- und Sekundärspulen ($L_A$, $L_B$) des Erkennungssystems die aktive Fläche (3) des induktiven Energieübertragungssystems abdecken und mäanderförmig ausgebildet sind, so dass durch das magnetische Feld des induktiven Energieübertragungssystems keine oder im Verhältnis zur Spannung der Quelle (7) kleine elektrische Spannung in der Primär- und Sekundärspule des Erkennungssystems induziert wird.

2. Induktives Energieübertragungssystem nach Anspruch 1, **dadurch gekennzeichnet, dass** die elektrische Größe der Strom und/oder die Spannung, insbesondere die sich ändernde Blindleistung, ist.

3. Induktives Energieübertragungssystem nach Anspruch 1 oder 2, **dadurch gekennzeichnet, dass** eine AC-Quelle (7) den primären Schwingkreis ($L_A$-$C_A$) speist, wobei die Frequenz der AC-Quelle (7) gleich der Resonanzfrequenz ($f_{res}$) der Schwingkreise ($L_A$-$C_A$; $L_B$-$C_B$) ist.

4. Induktives Energieübertragungssystem nach einem der vorhergehenden Ansprüche, **dadurch gekennzeichnet, dass** die Resonanzfrequenz ($f_{res}$) größer ist als die Grundfrequenz ($f_0$) des Energieübertragungssystems ist, besonders bevorzugt zwischen der 5-ten und 7-ten oder zwischen der 7-ten und 9-ten Oberharmonischen des Energieübertragungssystems liegt.

5. Induktives Energieübertragungssystem nach einem der vorhergehenden Ansprüche, **dadurch gekennzeichnet, dass** die Primär- und Sekundärspulen ($L_A$, $L_B$) des Erkennungssystems Flachspulen sind, die insbesondere durch eine Leiterplatte gebildet sind.

6. Induktives Energieübertragungssystem nach einem der vorhergehenden Ansprüche, **dadurch gekennzeichnet, dass** die Primär- und Sekundärspule ($L_A$, $L_B$) des Erkennungssystems mindestens die Größe und Form der Primärwicklung des Energieübertragungssystems aufweisen oder über diese seitlich hinausragen.

7. Induktives Energieübertragungssystem nach einem der vorhergehenden Ansprüche, **dadurch gekennzeichnet, dass** die Primär- und Sekundärspulen ($L_A$, $L_B$) des Erkennungssystems jeweils durch mehrere gerade Leitungsabschnitte (4) gebildet sind, welche jeweils zueinander parallel und in Serie angeordnet sind, und dass die geraden Leitungsabschnitte (4) der Primär- und Sekundärspulen ($L_A$, $L_B$) parallel oder in einem Winkel zwischen 0 und 90° zueinander angeordnet sind.

8. Induktives Energieübertragungssystem nach Anspruch 7, **dadurch gekennzeichnet, dass** die Länge der geraden Leitungsabschnitte (4) so bemessen ist, dass sich die Leitungsabschnitte (4) über die Primäranordnung oder Sekundäranordnung des Energieübertragungssystems erstrecken.

9. Induktives Energieübertragungssystem nach Anspruch 7 oder 8, **dadurch gekennzeichnet, dass** der Abstand (A) der benachbarten geraden und parallel zueinander angeordneten Leitungsabschnitte (4) an die Größe der kleinsten zu detektierenden Fremdkörper (F) angepasst ist.

10. Induktives Energieübertragungssystem nach einem der Ansprüche 7 bis 9, **dadurch gekennzeichnet, dass** der Abstand (A) der benachbarten geraden und parallel zueinander angeordneten Leitungsabschnitte (4) 1 bis 10 cm, besonders bevorzugt 2,5 bis 8 cm, beträgt.

11. Induktives Energieübertragungssystem nach einem der vorhergehenden Ansprüche, **dadurch gekennzeichnet, dass** die Primär- und Sekundärspulen ($L_A$, $L_B$) des Erkennungssystems in einem, insbesondere flachen, Gehäuse angeordnet sind oder zusammen mit der Primärwicklung oder der Sekundärwicklung des Energieübertragungssystems in einem Gehäuse angeordnet sind.

12. Induktives Energieübertragungssystem nach einem der vorhergehenden Ansprüche, **dadurch gekennzeichnet, dass** der primäre Schwingkreis ($L_A$-$C_A$) durch die Primärspule ($L_A$) und einen Kondensator ($C_A$), welche insbesondere in Reihe geschaltet sind, gebildet ist, und dass der sekundäre Schwingkreis ($L_B$-$C_B$) durch die Sekundärspule ($L_B$) und einen Kondensator ($C_B$), welche insbesondere parallel geschaltet sind, gebildet ist, und dass die Quelle (7) eine Wechselspannungs- oder Wechselstromquelle ist, an der der primäre Schwingkreis ($L_A$-$C_A$) angeschlossen ist.

13. Induktives Energieübertragungssystem nach Anspruch 12, **dadurch gekennzeichnet, dass** ein Gleichrichter (8) die sekundärseitige Ausgangsspannung des sekundärseitigen Schwingkreises ($L_B$-$C_B$) gleichrichtet und mittels eines Kondensators ($C_{tp}$) glättet, wobei die Überwachungseinrichtung (9) die Ausgangsspannung des Gleichrichters ermittelt und mit einem in einem Speicher abgelegten Spannungswert oder einer Referenzspannung vergleicht.

14. Induktives Energieübertragungssystem nach Anspruch 13, **dadurch gekennzeichnet, dass** die Überwachungseinrichtung durch einen Mikrocontroller gebildet ist, der die Quelle, insbesondere mit einem PWM-Ausgang, bildet, und der mit einem Analog-Digitalwandler-Eingang die Ausgangsspannung des Gleichrichters ermittelt.

15. Induktives Energieübertragungssystem nach einem der vorhergehenden Ansprüche, **dadurch gekennzeichnet, dass** eine Anzeigeeinheit ein visuelles Signal und/oder ein Lautsprecher ein akustisches Signal erzeugt, sofern ein oder mehrere Fremdkörper erkannt worden sind.

16. Induktives Energieübertragungssystem nach einem der vorhergehenden Ansprüche, **dadurch gekenn-**

**zeichnet, dass** sich das Erkennungssystem in Intervallen kalibriert, in dem die Frequenz der Quelle variiert wird, bis die Frequenz ($f_{res}$), bei der die maximale Blindleistung der Schwingkreisanordnung auftritt, ermittelt ist.

## Claims

1. Inductive power transmission system with a detection system for detecting electrically-conductive foreign bodies (F) in the region (3) between the primary and second winding of the inductive power transmission system, wherein the detection system also has a primary coil ($L_A$) and a secondary coil ($L_B$), which are coupled together, and the primary coil ($L_A$) and the secondary coil ($L_B$) of the detection system are components of electric oscillating circuits ($L_A$-$C_A$; $L_B$-$C_B$), which both have the same resonance frequency ($f_{res}$), wherein an electric source (7) excites an oscillating circuit ($L_A$-$C_A$) and a monitoring apparatus monitors at least one electric variable on the secondary and/or primary side of the detection system and performs the foreign body detection based on the measured electric variable, **characterised in that** the resonance frequency ($f_{res}$) of the coupled primary and secondary coils ($L_A$, $L_B$) of the detection system is different from the base frequency ($f_0$) and the frequencies of the higher harmonic of the power transmission system, wherein the primary and secondary coils ($L_A$, $L_B$) of the detection system cover the active surface (3) of the inductive power transmission system and are formed in a meandering shape so that no electric voltage or low electric voltage, in relation to the voltage of the source (7), is induced in the primary and secondary coil of the detection system by the magnetic field of the inductive power transmission system.

2. Inductive power transmission system according to claim 1, **characterised in that** the electric variable is the current and/or the voltage, in particular the varying reactive power.

3. Inductive power transmission system according to claim 1 or 2, **characterised in that** an AC source (7) feeds the primary oscillating circuit ($L_A$-$C_A$) wherein the frequency of the AC source (7) is the same as the resonance frequency ($f_{res}$) of the oscillating circuits ($L_A$-$C_A$; $L_B$-$C_B$).

4. Inductive power transmission system according to any one of the preceding claims, **characterised in that** the resonance frequency ($f_{res}$) is greater than the base frequency ($f_0$) of the power transmission system, particularly preferably between the 5th and 7th or between the 7th and 9th higher harmonic of the power transmission system.

5. Inductive power transmission system according to any one of the preceding claims, **characterised in that** the primary and secondary coils ($L_A$, $L_B$) of the detection system are flat coils, which are in particular formed by a circuit board.

6. Inductive power transmission system according to any one of the preceding claims, **characterised in that** the primary and secondary coil ($L_A$, $L_B$) of the detection system comprise at least the size and shape of the primary winding of the power transmission system or protrude laterally over them.

7. Inductive power transmission system according to any one of the preceding claims, **characterised in that** the primary and secondary coils ($L_A$, $L_B$) of the detection system are in each case formed by a plurality of straight cable sections (4), which are in each case arranged parallel to one another and in series and **in that** the straight cable sections (4) of the primary and secondary coils ($L_A$, $L_B$) are arranged parallel or at an angle of between 0 and 90° to one another.

8. Inductive power transmission system according to claim 7, **characterised in that** the length of the straight cable sections (4) is dimensioned such that the cable sections (4) extend over the primary arrangement or secondary arrangement of the power transmission system.

9. Inductive power transmission system according to claim 7 or 8, **characterised in that** the distance (A) of the adjacent straight cable sections (4) arranged parallel to one another is adapted to the size of the smallest foreign bodies (F) to be detected.

10. Inductive power transmission system according to any one of claims 7 to 9, **characterised in that** the distance (A) of the adjacent straight cable sections (4) arranged parallel to one another is 1 to 10 cm, particularly preferably 2.5 to 8 cm.

11. Inductive power transmission system according to any one of the preceding claims, **characterised in that** the primary and secondary coils ($L_A$, $L_B$) of the detection system are in a housing, in particular a flat housing or are arranged together with the primary winding or the secondary winding of the power transmission system in one housing.

12. Inductive power transmission system according to any one of the preceding claims, **characterised in that** the primary oscillating circuit ($L_A$-$C_A$) is formed by the primary coil ($L_A$) and a capacitor ($C_A$), which are connected in particular in series and **in that** the secondary oscillating circuit ($L_B$-$C_B$) is formed by the secondary coil ($L_B$) and a capacitor ($C_B$), which are connected in particular in parallel, and **in that** the source (7) is an alternating voltage source or alternating current source, to which the primary oscillating circuit ($L_A$-$C_A$) is connected.

13. Inductive power transmission system according to claim 12, **characterised in that** a rectifier (8) rectifies the secondary side output voltage of the secondary side oscillating circuit ($L_B$-$C_B$) and smooths it by means of a capacitor ($C_{tp}$), wherein the monitoring apparatus (9) determines the output voltage of the rectifier and compares it with a voltage value or a reference voltage stored in a storage device.

14. Inductive power transmission system according to claim 13, **characterised in that** the monitoring apparatus is formed by a microcontroller, which forms the source, in particular with a PWM output, and which determines the output voltage of the rectifier with an analogue/digital converter input.

15. Inductive power transmission system according to any one of the preceding claims, **characterised in that** a display unit generates a visual signal and/or a speaker generates an acoustic signal, provided one or a plurality of foreign bodies have been detected.

16. Inductive power transmission system according to any one of the preceding claims, **characterised in that** the detection system is calibrated in intervals in which the frequency of the source is varied until the frequency ($f_{res}$), at which the maximum reactive power of the oscillating circuit arrangement occurs, is determined.

## Revendications

1. Système inductif de transfert d'énergie muni d'un système de reconnaissance pour reconnaître des corps étrangers électriquement conducteurs (F) dans la zone (3) entre le bobinage primaire et le bobinage secondaire du système inductif de transfert d'énergie, le système de reconnaissance présentant lui aussi une bobine primaire ($L_A$) et une bobine secondaire ($L_B$) couplées l'une à l'autre, la bobine primaire ($L_A$) et la bobine secondaire ($L_B$) du système de reconnaissance constituant des composants de circuits électriques oscillants ($L_A$-$C_A$; $L_B$-$C_B$) qui présentent tous les deux la même fréquence de résonnance ($f_{res}$), où une source électrique (7) active un circuit oscillant ($L_A$-$C_A$) et un dispositif de surveillance surveille au moins une grandeur électrique du côté secondaire et/ou primaire du système de reconnaissance et effectue la reconnaissance de corps étrangers grâce à la grandeur électrique mesurée, **caractérisé en ce que** la fréquence de résonnance ($f_{res}$) des bobines primaire et secondaire couplées ($L_A$, $L_B$) du système de reconnaissance est différente de la fréquence fondamentale ($f_0$) et des fréquences des harmoniques supérieures du système de transfert d'énergie, les bobines primaire et secondaire ($L_A$, $L_B$) du système de reconnaissance couvrant la surface active (3) du système inductif de transfert d'énergie et étant constituées en méandres, de façon que le champ magnétique du système inductif de transfert d'énergie n'induise aucune tension électrique ou une faible tension électrique par rapport à la tension de la source (7) dans les bobines primaire et secondaire du système de reconnaissance.

2. Système inductif de transfert d'énergie selon la revendication 1, **caractérisé en ce que** la grandeur électrique est l'intensité et/ou la tension, en particulier la puissance réactive variable.

3. Système inductif de transfert d'énergie selon la revendication 1 ou 2, **caractérisé en ce qu'**une source de courant alternatif (7) alimente le circuit oscillant primaire ($L_A$-$C_A$), la fréquence de la source de courant alternatif (7) étant égale à la fréquence de résonnance ($f_{res}$) des circuits électriques oscillants ($L_A$-$C_A$; $L_B$-$C_B$).

4. Système inductif de transfert d'énergie selon l'une des revendications précédentes, **caractérisé en ce que** la fréquence de résonance ($f_{res}$) est supérieure à la fréquence fondamentale ($f_0$) du système de transfert d'énergie, située particulièrement préférentiellement entre la 5$^e$ et la 7$^e$ ou entre la 7$^e$ et la 9$^e$ harmonique supérieure du système de transfert d'énergie.

5. Système inductif de transfert d'énergie selon l'une des revendications précédentes, **caractérisé en ce que** les bobines primaire et secondaire ($L_A$, $L_B$) du système de reconnaissance sont des bobines plates, constituées en particulier d'un circuit imprimé.

6. Système inductif de transfert d'énergie selon l'une des revendications précédentes, **caractérisé en ce que** les bobines primaire et secondaire ($L_A$, $L_B$) du système de reconnaissance présentent au moins la taille et la forme du bobinage primaire du système inductif de transfert d'énergie ou le dépassent latéralement.

7. Système inductif de transfert d'énergie selon l'une des revendications précédentes, **caractérisé en ce que** les bobines primaire et secondaire ($L_A$, $L_B$) du système de reconnaissance sont constituées respectivement de plusieurs segments droits (4) disposés respectivement parallèlement et en série les uns des autres, et **en ce que** les segments droits (4) des bobines primaire et secondaire ($L_A$, $L_B$) sont disposés en parallèle ou à un angle compris entre 0 et 90° les uns des autres.

8. Système inductif de transfert d'énergie selon la revendication 7, **caractérisé en ce que** la longueur des segments droit (4) est dimensionnée de façon que les segments droits (4) s'étendent sur la configuration primaire ou secondaire du système de transfert d'énergie.

9. Système inductif de transfert d'énergie selon la revendication 7 ou 8, **caractérisé en ce que** la distance (A) entre les segments droits voisins parallèles (4) est adaptée à la taille du plus petit corps étranger à détecter (F).

10. Système inductif de transfert d'énergie selon l'une des revendications 7 à 9, **caractérisé en ce que** la distance (A) entre les segments droits voisins parallèles (4) est de 1 à 10 cm, particulièrement préférentiellement de 2,5 à 8 cm.

11. Système inductif de transfert d'énergie selon l'une des revendications précédentes, **caractérisé en ce que** les bobines primaire et secondaire ($L_A$, $L_B$) du système de reconnaissance sont disposées dans un boîtier, en particulier plat, ou dans un boîtier ensemble avec un bobinage primaire ou secondaire du système de transfert d'énergie.

12. Système inductif de transfert d'énergie selon l'une des revendications précédentes, **caractérisé en ce que** le circuit oscillant primaire ($L_A$-$C_A$) est constitué de la bobine primaire ($L_A$) et d'un condensateur ($C_A$), commutés en particulier en série, et **en ce que** le circuit oscillant secondaire ($L_B$-$C_B$) est constitué de la bobine secondaire ($L_B$) et d'un condensateur ($C_B$), commutés en particulier en parallèle, et **en ce que** la source (7) est une source de tension alternative ou de courant alternatif, à laquelle est connecté le circuit oscillant primaire ($L_A$-$C_A$).

13. Système inductif de transfert d'énergie selon la revendication 12, **caractérisé en ce qu'**un redresseur (8) redresse la tension de sortie secondaire du circuit oscillant secondaire ($L_B$-$C_B$) et la lisse au moyen d'un condensateur ($C_{tp}$), le dispositif de surveillance (9) déterminant la tension de sortie du redresseur et la comparant à une valeur de tension enregistrée dans une mémoire ou à une tension de référence.

14. Système inductif de transfert d'énergie selon la revendication 13, **caractérisé en ce que** le dispositif de surveillance est constitué d'un microcontrôleur qui constitue la source, en particulier avec une sortie MLI, et qui détermine la tension de sortie du redresseur avec une entrée de convertisseur analogique-numérique.

15. Système inductif de transfert d'énergie selon l'une des revendications précédentes, **caractérisé en ce qu'**une unité d'affichage génère un signal visuel et/ou **en ce qu'**un haut-parleur génère un signal acoustique, dans la mesure où un ou plusieurs corps étrangers ont été reconnus.

16. Système inductif de transfert d'énergie selon l'une des revendications précédentes, **caractérisé en ce que** le système de reconnaissance s'étalonne par intervalles, où on peut faire varier la fréquence de la source jusqu'à détermination de la fréquence ($f_{res}$) où se manifeste la puissance réactive maximale de la configuration de circuit oscillant.

Fig. 1

Fig. 2

Fig. 3

# Fig. 4

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009033236 A1
- DE 102009033237 A1
- DE 69827733 T2
- DE 69834537 T2
- EP 2317625 A2
- US 3461353 A
- EP 1189076 A2
- EP 0222028 A1
- DE 102011086904 A1
- DE 102011105063 A1
- US 2012175967 A1
- DE 202011050264
- US 2013176023 A1